# EUROPEAN PATENT APPLICATION

(11) **EP 4 782 285 A1**
(43) Date of publication of application: **29.07.2026**
(21) Application number: 25153857.5
(22) Date of filing: 24.01.2025
(51) Int. Cl.: B60R 25/24, G07C 9/00

(54) **KEY ENTITY, SHARER DEVICE AND METHOD FOR RESTRICTING THE ENTITLEMENTS OF A SHARED DIGITAL KEY**

(71) Applicant: Bayerische Motoren Werke Aktiengesellschaft, 80809 München (DE)
(72) Inventor: Fink, Matthias, 81541 München (DE)

(57) **Abstract**

The present document describes a key entity (160) comprising a storage area (166) for storing a shared digital key (161) for controlling one or more vehicle functions (103) of a vehicle (100). The key entity (160) is configured to store restriction data with regards to a usage restriction of the key entity (160) in the storage area (166) of the key entity (160), wherein the usage restriction defines a scope of vehicle functions (103) that the key entity (160) is designated for. Furthermore, the key entity (160) is configured to send the restriction data to a sharer device (110) which comprises a digital key (111) from which the shared digital key (161) of the key entity (160) is to be derived, and in reaction to receiving a transfer request from the sharer device (110), to generate the shared digital key (161) in accordance to a set of entitlements, which is indicated within the transfer request.

## Description

The present document is directed at controlling a function of a vehicle using a key entity, such as a key card. In particular, the present document is directed at restricting the entitlements for controlling a vehicle function of a key entity.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with a key entity, notably with a key card. The present document is directed at the technical problem of restricting the entitlements of a shared digital key on a key entity, notably on a key card, in a reliable and secure manner.

The technical problem is solved by each one of the independent claims. Preferred examples are specified in the dependent claims.

According to an aspect a key entity comprising a storage area for storing a shared digital key is described. The key entity may comprise one or more electronic components. Example key entities are a key card or a key fob or a portable electronic (smart) device. The shared digital key may be stored within a secure element of the storage area.

The shared digital key may be a Car Connectivity Consortium, CCC, digital key, according to the CCC Digital Key Standard, Release 3 or higher. The shared digital key may be derived from a (CCC based) digital key of a sharer device. The shared digital key may be configured to enable the key entity to control one or more vehicle functions of a vehicle.

The key entity may comprise a processor (e.g., as a control unit of the key entity). On the other hand, the key entity typically does not comprise its own power supply. The key entity is typically configured to receive electrical power for operating the storage area and/or for operating the processer exclusively from an external entity (e.g., from a sharer device). The power may be transferred to the key entity via an electromagnetic power transfer scheme. In particular, the power may be transferred to the key entity via a communication link, notably via an NFC communication link.

The key entity is configured to store restriction data with regards to a usage restriction of the key entity in the storage area of the key entity. The usage restriction may define the scope of vehicle functions that the key entity is designated for. The restriction data may have been written into the storage area of the key entity by the provider of the key entity (e.g., prior to distribution of the key entity).

The key entity may comprise a certificate which is stored in the storage area of the key entity. The certificate may be an Instance CA certificate of the key entity. The certificate, notably the Instance CA certificate, may have been signed by the provider of the key entity, notably using the private key of a key of the provider. The restriction data may be embedded within the certificate. The signature of the certificate may have been generated across data that includes the restriction data. As a result of this, the authenticity of the restriction data may be verified in a reliable manner based on the signature of the certificate.

Alternatively, or in addition, the restriction data may be stored, notably as a restriction configuration and/or without a digital signature, in the storage area of the key entity. As a result of this, the restriction data may be provided on the key entity in a flexible and efficient manner.

The usage restriction may indicate or may comprise a particular usage profile out of a plurality of different pre-determined usage profiles, wherein the different pre-determined usage profiles may be associated with different sets of vehicle functions (that a key entity may be designated for).

The plurality of different usage profiles may comprise,
- a full or restricted service profile which is associated with a set of vehicle functions for enabling a maintenance service to be performed on the vehicle;
- a valet profile which is associated with a set of vehicle functions for enabling a valet parking service to be performed with the vehicle;
- an access only profile which is associated with a set of vehicle functions for limiting usage of the key entity to accessing an interior of the vehicle; and/or
- an access and drive restricted profile which is associated with a set of vehicle functions for restricting usage of the key entity to driving the vehicle within a restricted area and/or time period.

The plurality of different usage profiles may comprise one or more profiles as specified in the CCC-TS-101 specification, Release 3 or higher, notably in Table 11 5 of the CCC-TS-101 specification, Release 3. The content of the CCC-TS-101 specification, Release 3 or higher, is incorporated herein by reference in its entirety.

By making use of pre-determined profiles, the usage restriction of the key entity may be defined in an efficient and reliable manner.

The key entity is further configured to send the restriction data to the sharer device which comprises the digital key from which the shared digital key of the key entity is to be derived. The restriction data may be sent via the communication link, notably the NFC communication link, between the key entity and the sharer device. The restriction data may be sent in reaction to a request from the sharer device.

In addition, the key entity is configured, in reaction to receiving a transfer request from the sharer device, to generate the shared digital key in accordance to a set of entitlements, which is indicated within the transfer request. The set of entitlements may have been determined by the sharer device based on the restriction data. The transfer request may be sent from the sharer device to the key entity via the communication link.

Hence, a key entity is described, which comprises restriction data that is indicative of a usage restriction of the key entity. As a result of this, a particularly reliable and secure key sharing process with the key entity is enabled.

The key entity may be configured to verify whether or not the set of entitlements comprised within the transfer request is compatible with the usage restriction of the key entity, notably with the scope of vehicle functions that the key entity is designated for. In particular, it may be verified whether or not the set of vehicle functions, which is associated with the set of entitlements, is a subset of the scope of vehicle functions, which is defined by the usage restriction.

Furthermore, the key entity may be configured to generate the shared digital key, if it is determined that the set of entitlements is compatible with the usage restriction, and/or to prevent generation of the shared digital key, if it is determined that the set of entitlements is not compatible with the usage restriction. As a result of this, a particularly secure sharing process may be achieved.

According to a further aspect, a sharer device comprising a digital key for controlling a main set of one or more vehicle functions of a vehicle is described. The sharer device is configured to determine that the digital key is to be shared with a key entity to provide a shared digital key on the key entity, in order to enable the key entity to control a subset of the main set of one or more vehicle functions of the vehicle. The key sharing process may be initiated based on a user input of the user of the sharer device.

Furthermore, the sharer device is configured to receive restriction data with regards to a usage restriction of the key entity from the key entity, wherein the usage restriction may define the scope of vehicle functions that the key entity is designated for. The restriction data may be received via the communication link, notably the NFC communication link, between the sharer device and the key entity. The restriction data may be received in response to a request that has been sent from the sharer device to the key entity (via the communication link).

The sharer device is further configured to determine the set of entitlements of the shared digital key in dependence of the restriction data. The set of entitlements of the shared digital key may be determined such that the set of entitlements is
- within the scope of vehicle functions that is indicated by the restriction data; and/or
- a subset of the main set of vehicle functions that can be controlled by the digital key.

As indicated above, the restriction data may be indicative of a particular usage profile out of a plurality of different pre-determined usage profiles, wherein the different pre-determined usage profiles may be associated with different sets of vehicle functions. The sharer device may be configured to determine the set of entitlements of the shared digital key based on the set of vehicle functions that is associated with the particular usage profile, in particular such that the set of entitlements of the shared digital key is a subset of the set of vehicle functions that is associated with the particular usage profile.

Furthermore, the sharer device is configured to send a transfer request for causing generation of the shared digital key at the key entity (via the communication link between the sharer device and the key entity), wherein the transfer request comprises the set of entitlements.

By taking into account the restriction data, notably the usage restriction, of the key entity, a particularly secure key sharing process may be provided.

The sharer device may be configured to output information regarding the set of entitlements of the shared digital key and/or regarding the usage restriction of the key entity as indicated by the restriction data, via the user interface of the sharer device, and in reaction to outputting the information, to capture a user input via the user interface. The transfer request for causing generation of the shared digital key may be sent to the key entity in dependence of the user input. In particular, the transfer request may only be sent to the key entity, if the key sharing has been approved by the user, notably by the user input of the user. By allowing the user to check the set of entitlements and/or the usage restriction, a particularly secure key sharing process may be achieved.

The sharer device may be configured to verify whether or not the usage restriction of the key entity is authentic. This may be verified based on the digital signature associated with the restriction data, notably based on the signature of the certificate, e.g., the Instance CA certificate, of the key entity, wherein the usage restriction may be embedded within the certificate.

The transfer request for causing generation of the shared digital key at the key entity, may be sent to the key entity if, notably only if, it is determined that the usage restriction of the key entity is authentic. As a result of this, a particularly secure key sharing process may be achieved.

According to a further aspect, a method for providing a key entity (notably a key card) with a shared digital key for controlling one or more vehicle functions of a vehicle is described. The method comprises determining restriction data with regards to a usage restriction of the key entity, wherein the usage restriction may define the scope of vehicle functions that the key entity is designated for and/or that the key entity should be usable for (at the most) and/or that the key entity should be restricted to. The restriction data may be stored on a storage area of the key entity. Furthermore, the method comprises causing the shared digital key to be derived from the digital key of a sharer device in dependance of the restriction data.

According to a further aspect, a software program is described. The software program may be adapted for execution on a processor and for performing the method steps of the method outlined in the present document when carried out on the processor.

According to another aspect, a storage medium is described. The storage medium may comprise a software program adapted for execution on a processor and for performing the method steps of the method outlined in the present document when carried out on the processor.

According to a further aspect, a computer program product is described. The computer program may comprise executable instructions for performing the method steps of the method outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 1c shows an example key card, as an example for a key entity;
Fig. 2 illustrates an example scenario for sharing a digital key with a key card;
Fig. 3 shows an example process for sharing a digital key with a key card;
Fig. 4 shows an example process for sharing a digital key with a key entity having a usage restriction;
Fig. 5 shows a flow chart of an example method for setting up a communication channel between a device and a digital key entity; and
Fig. 6 shows a flow chart of an example method for sharing a digital key with a key entity having a usage restriction.

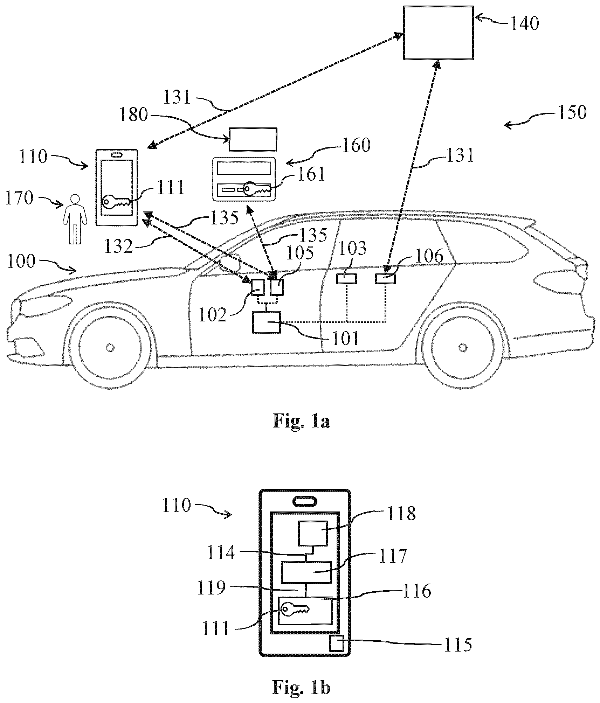

As outlined above, the present document is directed at the technical problem of handling a digital key for controlling one or more functions of a vehicle in a reliable, flexible and/or secure manner. In particular, the present document is directed at the technical problem of limiting a key entity, notably a key card, to the control of a restricted set of vehicle functions in a reliable and secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., a secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g., in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subject to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a certain distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g., be managed by a manufacturer of the vehicle 100. The device 110 and/or a communication unit 106 of the vehicle 100 may be configured to communicate with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g., a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to and/or generated on another electronic device, wherein the shared digital key typically determines the scope of the one or more vehicle functions 103 that can be controlled by the other electronic device. The shared digital key is derived from the digital key 111 of the device 110. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of one or more vehicle functions 103 that can be controlled by the digital key (i.e., the entitlements of the shared digital key).

Hence, the digital key device 110 may provide information (e.g., with regards to the entitlements) which is used for creating a shared digital key for, notably on, the other device (which may be referred to as the receiver device). The receiver device may create the shared digital key (which comprises a key pair with a private key and a public key). The public key (PK) of the shared digital key (along with information such as the entitlements) may be sent to the digital key device 110. The digital key device 110 may sign the PK of the shared digital key (along with the information regarding the shared digital key), e.g., using the private key of the digital key 111. Furthermore, the digital key device 110 may sign the one or more entitlements of the shared digital key. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which may be required for performing an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., the other electronic device). Alternatively, or in addition, the attestation may be sent (by the vehicle server 140) to the vehicle 100.

The attestation may be used by the vehicle 100 to check the authenticity of the shared digital key of the other electronic device. For this purpose, the vehicle 100 uses the digital key 111, notably the public key of the digital key 111, of the digital key device 110, from which the sharing process for creating the shared digital key was initiated. The digital key 111, notably the PK of the digital key 111, of the device 110 may be used to determine the one or more properties of the shared digital key (such as the entitlements of the shared digital key).

Furthermore, the central digital key, notably the public key (PK) of the central digital key, of the vehicle server 140 may be used to verify the authenticity of the attestation of the shared digital key of the other electronic device. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation, the shared digital key can be extracted. As indicated above, the integrity of the attestation may be verified using the (public key of) the central digital key of the vehicle server 140 and/or the (public key of the) digital key 111 from which the shared digital key was derived.

It may be desirable to enable the user 170 of the digital key device 110 to share the digital key 111 with a smart and/or key card 160 (referred to herein as key card) which typically only comprises substantially reduced communication and/or processing capabilities compared with an electronic device, such as a smartphone. In particular, the key card 160 typically does not comprise its own power supply (e.g., battery), such that the key card 160 cannot be operated autonomously. The key card 160 may be configured to receive electrical power for operating the key card 160 via a communication link 135, notably via an NFC communication link. This may be the only power source for operating the key card 160, i.e., the electronic components of the key card 160.

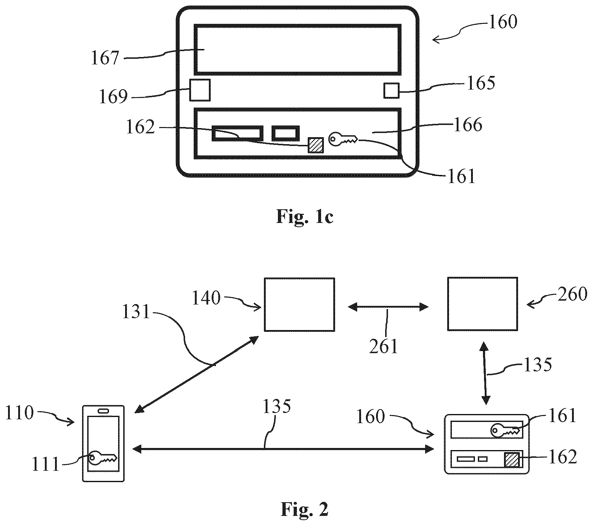

Fig. 1c shows an example key card 160 having a communication module 165, notably an NFC communication module, and a secure storage area 166, notably a secure element, wherein the storage area 166 is configured to store a shared digital key 161 and/or the attestation 162 for the shared digital key 161. Furthermore, the key card 160 may comprise an applet 167 (notably a digital key (DK) applet) which provides a set of commands for interacting with the key card 160, notably with the storage area 166 of the key card 160. The applet 167 may be executed on a processor of the key card 160 (when the processor of the key card 160 is supplied with electrical energy from an external power source). In addition, the key card 160 may have a code 169, in particular a machine-readable code such as a QR code, printed on the surface of the key card 160. The code 169 may be indicative of a password which may be used for establishing a secure communication channel with the key card 160.

The digital key device 110, notably the owner and/or sharer device, may interact with a key card 160 via a communication link 135, in particular via an NFC communication link, as illustrated in Fig. 2. Hence, the device 110 may be used as an NFC card reader 180 for the key card 160. The communication link 135 may be used to manage, e.g., to share or create, to terminate and/or to delete, the shared digital key 161 on the key card 160.

The key card 160 is typically provided by a key card provider, wherein the key card provider operates a card server 260. The card server 260 and the key card 160 may interact via a communication link 135, notably via an NFC communication link, e.g., in order to install software on the key card 160, such as the digital key applet 167, and/or in order to provide PKI (public key infrastructure) data to the key card 160. Furthermore, data (e.g., one or more secrets) for the PAKE (notably the SPAKE2+) scheme may be written onto the key card 160, wherein the PAKE scheme may be used to set up a secure communication channel with the key card 160. The PKI data of the card server 260 is typically independent from the PKI data used by the vehicle server 140 (for the digital key 111). The PKI data on the key card 160 may comprise a key pair for enabling a secure interaction with the key card 160. The card server 260 and the vehicle server 140 may be configured to communicate with one another via a (wireless and/or wireline) communication link 261.

It should be noted that the aspects which are described herein in the context of a key card are applicable in general to a key entity (such as a key card or a key fob or a portable device).

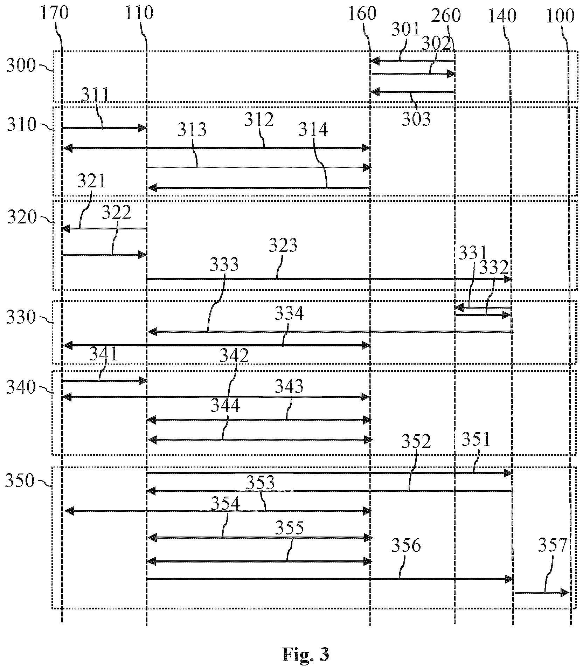

Fig. 3 illustrates an example process for sharing a digital key 111 from a digital key device 110, notably from the owner and/or sharer device, to a key card 160. The process involves the digital key device 110, in particular the digital key applet of the device 110, the key card 160, notably the digital key applet 167 of the key card 160, the card server 260, the vehicle server 140 (including a key tracking server (KTS) for tracking one or more shared digital keys 161) and/or the vehicle 100.

In a preparatory phase 300 (which is typically performed by the key card provider), the digital key applet 167 may be provided on the key card 160 (step 301), e.g., via the communication link 135 between the key server 260 and the key card 160. Furthermore, PKI data, notably a so-called instance CA (certificate authority), may be generated on the key card 160. The instance CA may comprise a key pair with a public key PK and a private key SK. Furthermore, a certificate for the instance CA may be provided, wherein the instance CA certificate may be signed by the CA of the key server 260 (using a SK of the digital key of the CA of the key server 260), in order to certify the validity of the instance CA of the key card 160 (steps 302, 303). As a result of this, the key card 160 may comprise a DK applet 167 which enables the key card 160 to perform actions with regards to a shared digital key 161. Furthermore, the key card 160 may comprise an instance CA with an instance CA certificate, which enables the key card 160 to be identified in a secure manner.

In a subsequent phase 310, the digital key device 110 may identify the key card 160 to which the shared digital key 161 is to be provided. For this purpose, the sharing process (for sharing a digital key 111, 161) may be initiated by the user 170 of the digital key device 110 via the user interface of the digital key device 110 (step 311). The user interface may e.g., be provided by the (vehicle-related) software application 118 that is executed on the digital key device 110. The key card 160 may be placed in close proximity to the communication unit 105 of the digital key device 110 for establishing a (NFC) communication link 135 between the digital key device 110 and the key card 160 (step 312).

The digital key device 110, notably the DK applet of the device 110, may then request the Instance CA certificate of the key card 160 from the key card 160, notably from the DK applet 167 of the key card 160 (step 313). The key card 160 may then provide the Instance CA certificate to the digital key device 110 (step 314). The Instance CA certificate (possibly in conjunction with one or more further certificates from the key chain of the Instance CA) may be used to identify the key card 160 in a secure and unambiguous manner.

In a subsequent phase 320, the user 170 may be requested to authorize the sharing process for sharing the digital key 111, 161 with the key card 160 which is identified by the Instance CA. For this purpose, the digital key device 110 may generate Hardware Token (i.e., key card) Sharing Data based on the Instance CA certificate of the key card 160 and based on the vehicle identifier of the vehicle 100 (for which the shared digital 161 is to be used), and possibly based on additional information. The Hardware Token Sharing Data may be provided to the vehicle server 140 within a pre-sharing step, in order to enable the vehicle server to identify the key card 160, to which the digital key 111, 161 is to be shared (step 323).

The user may be asked to authorize the transferal of the Hardware Token Sharing Data to the vehicle server 140 via the user interface of the digital key device 110 (steps 321, 322). Subject to authorization by the user, the Hardware Token Sharing Data may be signed by the DK applet of the device 110 (using the private key (SK) of the digital key 111), and the signed Hardware Token Sharing Data may be provided to the vehicle server 140 (step 323). The vehicle server 140 may verify the validity of the instance CA certificate of the key card 160, which is provided within the signed Hardware Token Sharing Data using the digital key 111, notably using the PK of the digital key 111, of the digital key device 110.

Once the vehicle server 140 has been informed about the identity of the key card 160, to which the digital key 111 is to be shared, (using the Instance CA of the key card 160) pairing data may be shared, in order to enable the digital key device 110 and the key card 160 to build up a secure communication channel between the device 110 and the key card 160, e.g., for sharing the digital key 111 (phase 330). An ECC (elliptic-curve cryptography)-based pairing algorithm protocol may be used for this purpose, in particular the SPAKE2+ protocol (i.e., the SPAKE2+ scheme). The SPAKE2+ protocol is e.g., described in chapter 18 of the CCC-TS-101 specification (e.g., release 3 or higher). This specification is incorporated herein by reference in its entirety.

The pairing data (notably a password) may be requested by the vehicle server 140 from the card server 260 (step 331) and may subsequently be provided to the vehicle server 140 (step 332). Subsequently, the pairing data (notably the password) may be provided to the device 110 (step 333). Alternatively, or in addition, the password for the pairing protocol may be provided via a code 169 which is visible on the key card 160 (step 334). In general, the password for the pairing protocol may be provided to the user 170 along with the key card 160 (e.g., upon card purchase). The password may be printed on the key card 160 and/or on a paper that is bundled with the key card 160, etc. As a result of this, the device 110 holds the pairing data (notably the password), which may be used to build up a secure communication channel with the key card 160.

In a subsequent phase 340, the pairing data may be used to set up a secure communication channel between the device 110 and the key card 160 for sharing the digital key 111. The user 170 may select the digital key 111 which is to be shared (step 341). Furthermore, the user 170 may select the entitlements of the shared digital key 161 (in particular the entitlements with regards to the one or more vehicle functions 103 that can be controlled using the shared digital key 161).

The user 170 may place the key card 160 onto the device 110 in order to set up a (NFC) communication link 135 between the device 110 and the key card 160 (step 342). Subsequently, the pairing algorithm protocol, notably the SPAKE2+ protocol, may be executed (step 343) using the pairing data (notably the password) that has been provided to the device 110 (step 343). The key card 160 may act as "verifier" within the pairing algorithm protocol. As a result of the pairing algorithm protocol a secure communication channel between the device 110 and the key card 160 is established, which may be used to generate a shared digital key 161 on the key card 160 (step 344). This process may be referred to as the endpoint creation process.

During the endpoint creation process, the shared digital key 161 is generated based on the digital key 111. Furthermore, a certificate for the shared digital key 161 is generated (wherein the certificate may be indicative of the Instance CA of the key card 160 (which is typically the issuer of the shared digital key 161)). The certificate (including the shared digital key 161) may be stored in a memory slot of the storage area 166 of the key card 160, thereby providing a (CCC) endpoint on the key card 160.

Furthermore, the attestation 162 for the shared digital key 161 may be generated by the sharer device 110 (within phase 350). The attestation 162 typically includes
- a key identifier of the shared digital key 161;
- the PK of the shared digital key 161;
- information regarding the validity of the shared digital key 161; and/or
- information regarding the entitlements of the shared digital key 161.

The attestation 162 may be signed by the device 110 (using the SK of the digital key 111). The signed attestation 162 may be sent to the vehicle server 140 (step 351) and the vehicle server 140 may verify the authenticity of the attestation 162 using the PK of the digital key 111. Furthermore, the vehicle server 140 may receive and/or verify the certificate and/or the certificate chain of the shared digital key 161. In addition, the vehicle server 140 may sign the verified attestation 162 using the private key (SK) of the central digital key of the vehicle server 140. Furthermore, the vehicle server 140 may pass the attestation 162 (including the shared digital key 161) to the key tracking server (KTS), thereby enabling tracking of the shared digital key 161.

The signed attestation 162 and/or the receipt of the KTS (signed by the vehicle server 140) may be passed back to the device 110 (step 352), possibly along with an (encrypted) immobilizer token (for enabling the shared digital key 161 to start the engine of the vehicle 100).

Subsequently, the signed attestation 162 may be provided to (and stored on) the key card 160. For this purpose, the user 170 may place the key card 160 on the device 110 to establish a or to reestablish the communication link 135 (step 353). Furthermore, the pairing algorithm protocol, notably the SPAKE2+ protocol (i.e., scheme), may be executed, to set up a secure communication channel between the device 110 and the key card 160 (step 354). Eventually, the attestation 162 may be written to the key card 160 (step 354). Furthermore, the vehicle server 140 may be informed that the key sharing process is terminated (step 356). In addition, the attestation 162 (including the (PK of the) shared digital key 161) may be sent from the vehicle server 140 to the vehicle 100, thereby enabling the use of the shared digital key 161 for controlling one or more vehicle functions 103 of the vehicle 100 (in accordance to the entitlements of the shared digital key 161).

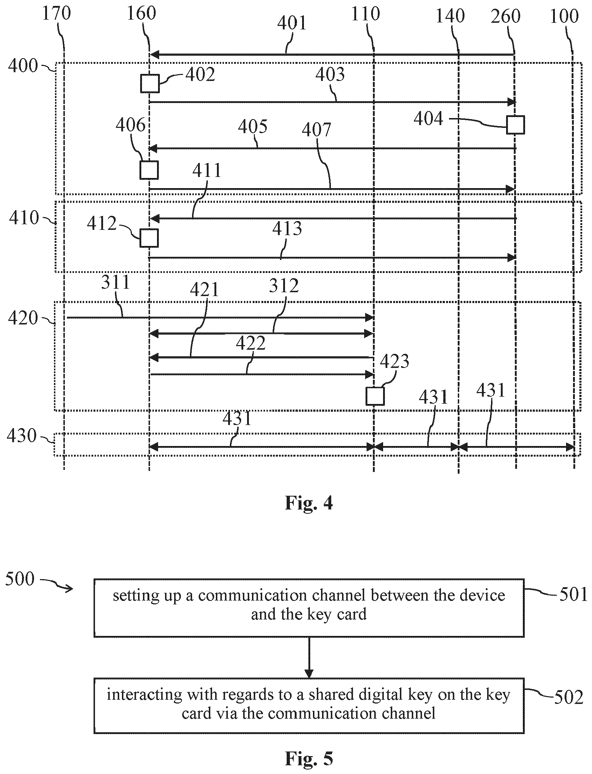

Fig. 5 shows a flow chart of an example (possibly computer-implemented) method 500 for managing a shared digital key 161 on a key card 160, wherein the shared digital key 161 may be used and/or is enabled for controlling one or more vehicle functions 103 of a vehicle 100. The shared digital key 161 is typically derived from the digital key 111 of a sharer device 110. In particular, the shared digital key 161 may be a subordinate key of the digital key 111 within a key chain. The method 500 may be executed by the key card 160 or by the device 110, notably by the sharer device 110.

The method 500 comprises setting up 501 a communication channel, notably a secure communication channel, between the device 110 and the key card 160. The communication channel is typically provided using a (NFC) communication link 135 between the device 110 and the key card 160. For this purpose, the key card 160 may be placed on the device 110 (such that the key card 160 is provided with electrical energy for operating the key card 160, notably for operating the DK applet 167 of the key card 160, by the device 110). The communication channel may be set up using a password authenticated key exchange (PAKE) algorithm, thereby enabling the efficient provision of a secure communication channel.

Furthermore, the method 500 comprises interacting 502 with regards to the shared digital key 161 of the key card 160 via the (secure) communication channel. Interacting 502 may comprise creating, terminating and/or deleting the digital key endpoint for the shared digital key 161.

By making use of a secure communication channel, a particularly secure interaction between the device 110 and the key card 160 may be provided in an efficient manner. The secure communication channel may make use of one or more shared secrets that have been derived by the device 110 and the key card 160 during the setup process for setting up the communication channel.

As outlined above, the user 170 of the sharer device 110 may select the set of vehicle functions 103 that can be controlled by a shared digital key 161 (i.e., the set of entitlements of the shared digital key 161) during the sharing process. A manual selection process for defining the set of entitlements of the shared digital key 161 may be prone to error, notably if the user 170 is distracted (e.g., following an accident of the vehicle 100). The key entity 160, notably the key card, may comprise a default usage restriction which restricts the scope of vehicle functions 103 that can be controlled by the key entity 160 by default, such that the set of entitlements of a shared digital key 161 of the key entity 160 are automatically limited to the default usage restriction. As a result of this, a reliable and secure sharing process may be performed, without the risk of providing the key entity 160 with a set of entitlements that goes beyond the intention of the user 170 of the sharer device 110.

Hence, a key entity 160, notably a key card, may be restricted to a maximum set of privileges that it may receive, e.g., to a set of privileges which is needed for a particular use case (such as maintenance service, or a car rental service, or an accident intervention service). By doing this, the sharing of unnecessary privileges to a key entity 160 may be prevented, thereby protecting a user 170 against abuse, e.g., in case a digital key 161 is shared hastily or in an extreme situation (such as an emergency situation) with too many privileges.

During the key sharing process the scope and/or the use case of the key entity 160 may be shown to the user 170 of the sharer device 110 (via the user interface of the sharer device 110). Alternatively, or in addition, the device 110 may be configured to filter the privileges that are to be shared in accordance to the ones that are allowed by the pre-determined scope and/or use case of the key entity 160. The key entity 160 may effectively limit the privileges (i.e., the set of controllable vehicle functions 103) of the shared digital key 161 and/or may restrict the privileges to one or more pre-determined types or other properties. As a result, abuse may be prevented in a reliable manner.

The restriction of the privileges (notably of the set of controllable vehicle functions 103) of a key entity 160 may be achieved by making use of a PKI for the key entity 160, which indicates a specific use case (e.g., a usage profile) of the key entity 160, wherein the use case restricts the privileges of the key entity 160 to the particular use case. Alternatively, or in addition, one or more properties within the Instance CA of the key entity 160 may be used to set one or more limitations and/or restrictions of the privileges of the key entity 160.

Example limitations and/or restrictions of the privileges are:
- A limitation of the key entity 160 (and a shared digital key 161 of the key entity 160) to one or more pre-defined profiles (e.g., to the CCC access profile);
- A forced "Safe-share" key 161 (e.g., reduced engine power, audio performance, etc.);
- A maximum number of uses of the key entity 160; and/or
- A maximum validity duration of a shared digital key 161 of the key entity 160 (e.g., usage end date; e.g., limited to a maximum duration after sharing of the shared digital key 161).

It should be noted that several limiting factors may be combined.

Fig. 4 shows an example process for providing a shared digital key 161 on a key entity 160 that exhibits a default usage restriction. The process comprises a preparatory phase 400, 410 (e.g., as part of the preparatory phase 300 of the process of Fig. 3) during which the key entity 160 is associated with a usage restriction. The preparatory phase 400 causes the provision of an Instance CA on the key entity 160, wherein the certificate of the Instance CA comprises the usage restriction of the key entity 160 (e.g., as a certificate extension of the Instance CA certificate). The preparatory phase 410 causes the usage restriction to be stored as a (non-signed) configuration of the key entity 160 (wherein the restriction configuration with the usage restriction may be stored on the secure storage area 166 of the key entity 160).

The card server 260 (i.e., the provider of the key entity 160) may cause a DK applet 167 and/or an Instance CA to be provided at the key entity 160 (step 401, 301, 302), which may be stored in the storage area 166 of the key entity 160. Subsequently, the data for the Instance CA certificate, notably the data for a certificate signing request (CSR) is compiled by the key entity 160 (step 402), and a certificate signing request may be sent to the card server 260 (step 403). The card server 260 may embed the usage restriction of the key entity 160 into the Instance CA certificate (e.g., as a certificate extension), and may issue and sign the Instance CA certificate (step 404), e.g., using the SK of the key of the card service 260. The Instance CA certificate (which comprises the usage restriction) may be provided to the key entity 160 (step 405) and may be stored in (the storage area 166 of) the key entity 160 (step 406). Furthermore, the key entity 160 may inform the card server 260 that the Instance CA certificate has been successfully stored (step 407).

Alternatively, or in addition to providing a usage restriction with the Instance CA certificate, the usage restriction may be provided to the key entity 160 by the card server 260 as a restriction configuration (step 411). The restriction configuration may be stored in (the storage area 166 of) the key entity 160 (separately from the Instance CA certificate). Furthermore, the key entity 160 may inform the card server 260 that the restriction configuration has been successfully stored (step 413).

The usage restriction of the key entity 160 may be taken into account during a subsequent sharing process 420 for providing a shared digital key 161 on the key entity 160. The user 170 may select the digital key 111 of the sharer device 110 which is to be shared (step 301). Furthermore, a secure communication channel between the sharer device 110 and the key entity 170 may be established (step 312). The sharer device 110 may then request the key entity 160 to provide the Instance CA certificate and a possible usage restriction of the key entity 160 (step 421). In reaction to this, the key entity 160 may provide the Instance CA certificate to the sharer device 110. If the usage restriction is stored as a separate restriction configuration, the data regarding the usage restriction may be provided in addition to the Instance CA certificate (step 422). Hence, restriction data regarding the usage restriction of the key entity 160 may be provided to the sharer device 110.

The sharer device 110 may then compile data for the shared digital key 161 in dependence of the usage restriction of the key entity 160, which may be derived from the Instance CA certificate and/or from the restriction configuration that has been provided separately (step 423). The sharer device 110 may notably determine the set of entitlements of the shared digital key 161 in dependence of the usage restriction of the key entity 160. The user 170 may be involved in the process for determining the set of entitlements of the shared digital key 161. In particular, the set of entitlements of the shared digital key 161, which has been determined based on the usage restriction of the key entity 160, may be shown to the user 170 via the user interface of the sharer device 110, and the user 170 may be requested to confirm this set of entitlements.

Once, the set of entitlements of the shared digital key 161 has been determined, the shared digital key 161 may be generated on the key entity 160 in phase 430 (step 431). For this purpose, the sharer device 110 may sent a transfer request (with the set of entitlements) to the key entity 160. In reaction to receiving the transfer request, the key entity 160 may generate the shared digital key 161. Furthermore, the attestation 162 of the shared digital key 161 (which is indicative of the set of entitlements) may be generated (wherein this process involves the sharer device 110 and the vehicle server 140).

As indicated above, the usage restriction of the key entity 160 may be defined using a usage profile from a pre-determined set of different usage profiles. Example usage profiles are
- a service profile (full or restricted) which enables the key entity 160 to provide a maintenance service to the vehicle 100 (possibly with the right to start the engine of the vehicle 100);
- a valet profile which enables the key entity 160 to start the engine of the vehicle 100 in the context of a valet parking service;
- an access only profile which enables the key entity 160 to access the vehicle 100 without the right to start the engine of the vehicle 100;
- an access and drive restricted profile which may limit the power of the engine of the vehicle 100;
- Limitation to a time of day (daytime, regular working hours); and/or
- Self-terminating digital key only valid for a pre-determined duration (e.g., shared to a service person that cleans, refuels and/or quick-checks the vehicle 100).

Example profiles as specified by the CCC standard are
- Full: Full access and Drive Capabilities;
- Access Only: Only car access, no drive capabilities;
- Access and Drive Restricted: Access and Drive with Restrictions;
- Car Delivery: Car Delivery Profile;
- Valet: Valet Parking Key;
- Vehicle Service (full): Vehicle Service Key (full drive); and/or
- Vehicle Service (restricted): Vehicle Service Key (restricted drive).

Subsequent to sharing a shared digital key 161 with a key entity 160, the sharer device 110 may inform the user 170 about the fact that a shared digital key 161 is available on the key entity 160. By way of example, the sharer device 110 may detect that the sharer device 110 with the original digital key 111 is used for interacting with the vehicle 100. In reaction to this, the sharer device 110 may inform the user 170 about the shared digital key 161 (via the user interface of the sharer device 110). The user 170 may be given the possibility to delete the shared digital key 161. If the user 170 initiates the deletion of the shared digital key 161, the shared digital key 161 may be invalidated (at the vehicle server 140) and the vehicle 100 may be informed about the fact that the shared digital key 161 has been invalidated. By doing this, a particularly secure sharing process may be provided.

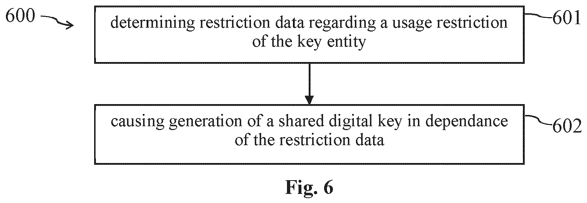

Fig. 6 shows a flow chart of an example (possibly computer-implemented) method 600 for providing a key entity 160 with a shared digital key 161 for controlling one or more vehicle functions 103 of a vehicle 100. The method 600 may be performed by the key entity 160 and/or by a sharer device 110 from which the shared digital key 161 is shared.

The method 600 comprises determining 601 restriction data with regards to a usage restriction of the key entity 160. The usage restriction may define the scope of vehicle functions 103 that the key entity 160 is designated for and/or that the key entity 160 is restricted to. The restriction data may be stored on a storage area 161 of the key entity 160. Determining the restriction data may comprise retrieving the restriction data from the storage area 166 of the key entity 160. Alternatively, or in addition, determining the restriction data may comprise receiving the restriction data via a communication link 135 from the key entity 160.

Furthermore, the method 600 comprises causing 602 a shared digital key 161 to be derived from the digital key 111 of the sharer device 110 in dependance of the restriction data. The causing step 602 may comprise sending and/or receiving a transfer request which comprises a set of entitlements for the shared digital key 161, wherein the set of entitlements has been determined in dependence of the restriction data.

By storing restriction data on a key entity 160, notably on a key card, a particularly reliable and secure key sharing process may be provided.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A key entity (160) comprising a storage area (166) for storing a shared digital key (161) for controlling one or more vehicle functions (103) of a vehicle (100); wherein the key entity (160) is configured to
- store restriction data with regards to a usage restriction of the key entity (160) in the storage area (166) of the key entity (160); wherein the usage restriction defines a scope of vehicle functions (103) that the key entity (160) is designated for;
- send the restriction data to a sharer device (110) which comprises a digital key (111) from which the shared digital key (161) of the key entity (160) is to be derived; and
- in reaction to receiving a transfer request from the sharer device (110), generate the shared digital key (161) in accordance to a set of entitlements, which is indicated within the transfer request.

2. The key entity (160) according to claim 1, wherein
- the key entity (160) comprises a certificate which is stored in the storage area (166) of the key entity (160); and
- the restriction data is embedded within the certificate.

3. The key entity (160) according to claim 2, wherein
- the certificate has been signed by a provider of the key entity (160), notably using a private key of a key of the provider; and/or
- the certificate is an Instance CA certificate of the key entity (160).

4. The key entity (160) according to any of the previous claims, wherein the restriction data is stored, notably as a restriction configuration and/or without a digital signature, in the storage area (166) of the key entity (160).

5. The key entity (160) according to any of the previous claims, wherein
- the usage restriction indicates a particular usage profile out of a plurality of different pre-determined usage profiles; and
- the different pre-determined usage profiles are associated with different sets of vehicle functions (103).

6. The key entity (160) according to claim 5, wherein the plurality of different usage profiles comprises,
- a full or restricted service profile which is associated with a set of vehicle functions (103) for enabling a maintenance service to be performed on the vehicle (100);
- a valet profile which is associated with a set of vehicle functions (103) for enabling a valet parking service to be performed with the vehicle (100);
- an access only profile which is associated with a set of vehicle functions (103) for limiting usage of the key entity (160) to accessing an interior of the vehicle (100); and/or
- an access and drive restricted profile which is associated with a set of vehicle functions (103) for restricting usage of the key entity (160) to driving the vehicle (100) within a restricted area and/or time period.

7. The key entity (160) according to any of claims 5 to 6, wherein the plurality of different usage profiles comprises one or more profiles as specified in the CCC-TS-101 specification, Release 3 or higher, notably in Table **Error! No text of specified style in document.**-5 of the CCC-TS-101 specification, Release 3.

8. The key entity (160) according to any of the previous claims, wherein the key entity (160) is configured to
- verify whether or not the set of entitlements comprised within the transfer request is compatible with the usage restriction of the key entity (160), notably with the scope of vehicle functions (103) that the key entity (160) is designated for; and
- generate the shared digital key (161), if it is determined that the set of entitlements is compatible with the usage restriction; and/or
- prevent generation of the shared digital key (161), if it is determined that the set of entitlements is not compatible with the usage restriction.

9. The key entity (160) according to any of the previous claims, wherein the key entity (160) is a key card or a key fob.

10. A sharer device (110) comprising a digital key (111) for controlling a main set of one or more vehicle functions (103) of a vehicle (100); wherein the sharer device (110) is configured to,
- determine that the digital key (111) is to be shared with a key entity (160) to provide a shared digital key (161) on the key entity (160), in order to enable the key entity (160) to control a subset of the main set of one or more vehicle functions (103) of the vehicle (100);
- receive restriction data with regards to a usage restriction of the key entity (160) from the key entity (160); wherein the usage restriction defines a scope of vehicle functions (103) that the key entity (160) is designated for;
- determine a set of entitlements of the shared digital key (161) in dependence of the restriction data; and
- send a transfer request for causing generation of the shared digital key (161) at the key entity (160); wherein the transfer request comprises the set of entitlements.

11. The sharer device (110) according to claim 10, wherein the sharer device (110) is configured to determine the set of entitlements of the shared digital key (161)
- to be within the scope of vehicle functions (103) that is indicated by the restriction data, and
- to be a subset of the main set of vehicle functions (103) that can be controlled by the digital key (111).

12. The sharer device (110) according to any of claims 10 to 11, wherein
- the restriction data is indicative of a particular usage profile out of a plurality of different pre-determined usage profiles that a key entity (160) may be designated for;
- the different pre-determined usage profiles are associated with different sets of vehicle functions (103); and
- the sharer device (110) is configured to determine the set of entitlements of the shared digital key (161) based on the set of vehicle functions (103) that is associated with the particular usage profile, in particular such that the set of entitlements of the shared digital key (161) is a subset of the set of vehicle functions (103) that is associated with the particular usage profile.

13. The sharer device (110) according to any of claims 10 to 12, wherein the sharer device (110) is configured to
- output information regarding the set of entitlements of the shared digital key (161) and/or regarding the usage restriction of the key entity (160) as indicated by the restriction data, via a user interface of the sharer device (110);
- in reaction to outputting the information, capture a user input via the user interface; and
- send the transfer request for causing generation of the shared digital key (161) in dependence of the user input.

14. The sharer device (110) according to any of claims 10 to 13, wherein the sharer device (110) is configured to
- verify whether or not the usage restriction of the key entity (160) is authentic, notably based on a digital signature associated with the restriction data; and
- send the transfer request for causing generation of the shared digital key (161) at the key entity (160), if, notably only if, it is determined that the usage restriction of the key entity (160) is authentic.

15. A method (600) for providing a key entity (160) with a shared digital key (161) for controlling one or more vehicle functions (103) of a vehicle (100); wherein the method (600) comprises,
- determining (601) restriction data with regards to a usage restriction of the key entity (160); wherein the usage restriction defines a scope of vehicle functions (103) that the key entity (160) is designated for; and wherein the restriction data is stored on a storage area (161) of the key entity (160); and
- causing (602) a shared digital key (161) to be derived from a digital key (111) of a sharer device (110) in dependance of the restriction data.
